# EUROPEAN PATENT APPLICATION

(11) **EP 3 361 437 A1**
(43) Date of publication of application: **15.08.2018**
(21) Application number: 17155814.1
(22) Date of filing: 13.02.2017
(51) Int. Cl.: G06Q 30/00

(54) **SENSE STIMULATING ARTEFACT**

(71) Applicant: The Procter & Gamble Company, Cincinnati, OH 45202 (US)
(72) Inventor: ETESSE, Patrick Jean-Francois, 1853 Strombeek-Bever (BE); OLIVEIRA, Nicolas Robert Nuno Cromarty, 1853 Strombeek-Bever (BE)
(74) Representative: Siddiquee, Sanaul Kabir

(57) **Abstract**

Described herein is an artefact (100) relating to a product comprising: a contactless memory tag (120), CMT, containing at least an identifier of the product, and a sensory stimulation element (140), SSE, reflecting a characteristic of the product. Method for preparing the artefact (100) comprising: identifying a sensory property of the product, incorporating a sample of the sensory property into the SSE (140), providing the CMT (120), wherein the memory contains an identifier of the product, and providing the artefact (100) containing the SSE (140) and CMT (120).

## Description

### FIELD OF THE INVENTION

Described herein are products and methods relating to a sense-stimulating artefact that provides a manner for sampling and obtaining a product sample-pack of that reduces costs, form and weight of a convention sample-pack.

### BACKGROUND OF THE INVENTION

Sample-packs a consumer product allows the consumer to try the product prior to a purchase. Sample packs are typically cumbersome items comprising a container such as a rigid bottle provided with the product for instance a fabric softener or shampoo. Some products cannot be provided in a sample-pack or would be prohibitively expensive such as aerosols that require complex dispensing systems or features beyond what can be delivered by a simple sachet. While magazines offer an effective means to distribute sample packs to a target audience, there is a limit as to the volume and weight it can carry which is often insufficient to allow effective sampling, for instance, a dose of laundry detergent or softener cannot be mounted within a magazine. Where a sample pack is provided on a display within a retail space, it requires a separate distribution channels, hiring of the retail space, and generation of significant amount of waste as distributed samples that remain unused by consumers after reception.

The present invention aims to overcome at least some of the problems of the art.

### SUMMARY OF THE INVENTION

Described herein is an artefact (100) relating to a product comprising:
- a contactless memory tag (120), CMT, containing at least an identifier of the product, and
- a sensory stimulation element (140), SSE, reflecting a characteristic of the product.

The SSE (140) may be scent-releasing and the CMT (120) is a near-field communication, NFC, tag. The artefact may be a magazine insert. The CMT may be configured to transmit data according to the state of the SSE, where the SSE has an unactivated or activated state.

The artefact (100) may further comprise a user-input panel having at least two states wherein the CMT is configured to transmit data according to the state of the user-input panel.

Also described is a method for preparing an artefact (100) as described herein, comprising:
- identifying a sensory property of the product,
- incorporating a sample of the sensory property into the SSE (140),
- providing the CMT (120), wherein the memory contains an identifier of the product, and
- providing the artefact (100) containing the SSE (140) and CMT (120).

The method may further comprise a step of attaching the CMT (120) and the artefact (100) to a substrate. Also described is an artefact prepared according to the method.

Also described herein is a method for requesting a sample-pack of a product, comprising:
- receiving on a smart device (200) an identifier of a product from the CMT (120) of the artefact (100),
- transferring the identifier and consumer contact information from the smart device (200) over the Internet (250) to a remote computer system (300) to initiate fulfilment of the request, and
- receiving on the smart device (200) a confirmation that a sample-pack of the product is to dispatched to the consumer.
The method according may be performed by the smart device (200).

Also described herein is a data stream which is representative of a computer program or computer program product having instructions which when executed by a computing device cause the computing device to perform the method of requesting a sample-pack of a product to be performed by the smart device (200).

Also described herein is a method for requesting a sample-pack of a product, comprising:
- receiving over the Internet (250) from a smart device (200) an identifier of a product from the CMT (120) of the artefact (100),
- receiving over the Internet (250) from the smart device (200) consumer contact information, and
- sending over the Internet (250) to the smart device (200) a confirmation that a sample-pack of the product is to be dispatched to the consumer.

The method of requesting a sample-pack of a product may be performed by remote computer system (300) connected to the Internet (250).

Also described herein is a method a computer program or computer program product having instructions which when executed by a computing device or system cause the computing device or system to perform the method for requesting a sample-pack of a product to be performed by remote computer system (300) connected to the Internet (250).

### BRIEF DESCRIPTION OF THE DRAWINGS

**FIG. 1** is a schematic illustration of an artefact described herein.
**FIG. 2** is a schematic of a consumer interacting with the artefact.
**FIG. 3** shows an exemplary of information transfer from the artefact via a smartphone across the Internet to the remote computer system.

### DETAILED DESCRIPTION OF THE INVENTION

Before the present artefact and methods of the invention are described, it is to be understood that this invention is not limited to particular artefact and methods or combinations described, since such artefact and methods and combinations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-10% or less, preferably +/-5% or less, more preferably +/-1% or less, and still more preferably +/-0.1 % or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, *e.g.,* any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined maybe combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

In the present description of the invention, reference is made to the accompanying drawings that form a part hereof, and in which are shown by way of illustration only of specific embodiments in which the invention may be practiced. Parenthesized or emboldened reference numerals affixed to respective elements merely exemplify the elements by way of example, with which it is not intended to limit the respective elements. It is to be understood that other embodiments maybe utilised and structural or logical changes maybe made without departing from the scope of the present invention. The following detailed description, therefore, is not to be taken in a limiting sense, and the scope of the present invention is defined by the appended claims.

Provided herein is an artefact, method of preparation of the artefact, and method of use of the artefact, wherein the artefact relates to a product.

According to one aspect artefact is provided relating to a product comprising:
- a contactless memory tag (CMT) containing at least an identifier of the product, and
- a sensory stimulation element (SSE) reflecting a characteristic of the product.

According to another aspect, a method is provided for preparing an artefact for promotion of a product comprising:
- identifying a sensory property of the product,
- incorporating a sample of the sensory property into a sensory stimulation element (SSE),
- providing a contactless memory tag (CMT), wherein the memory contains an identifier of the product, and
- providing the artefact containing the SSE and CMT.

According to another aspect, a method is provided transferring information related to a product comprising:
- receiving an identifier of a product from the artefact contactless memory tag (CMT), and
- transferring the identifier and optionally consumer contact information over the Internet to a central server.

The product is typically a consumer product having one or more sense-stimulating characteristics. By sense-stimulating, it is meant it can stimulate one or more of the human or animal senses, namely, olfactory, gustatory, tactile, visual, or sonic. The product may be a fluid (*e.g*. liquid, gel, vapour/gas), powder, tablet, pouch or other solid substance.

Examples of consumer products include:
- washing products such as fabric softeners, laundry detergents, cookware detergents (dishwasher, hand washing),
- cleaning products such as surface cleaners, floor cleaners, window cleaner,
- skin products such as creams *(e.g.* face, body, or hand), oils *(e.g.* face, body, or hand), perfumes,
- air-freshening products (e.g. liquids, gels, solids).

Preferably, the product has at least an olfactory-stimulating characteristic.

The artefact comprises a substrate for attachment of the CMT and the SSE. The substrate maybe any suitable for mounting of the CMT and the SSE. It is preferably opaque to radio frequency electromagnetic radiation. It may be formed at least partially from a polymeric material (*e.g.* polyethylene), from paper or a combination of these. It may be from a woven or non-woven material. It may or may not be at least partially adhesive. It may be flexible, semi-rigid, or rigid. The artefact may take the form of a multilayered structure comprising the CMT on a reverse side of the artefact, and the SSE provided on the front side. It maybe printable on one or both sides.

The artefact may be a magazine insert, meaning it is suitable for insertion within the pages of a magazine or for mounting onto an exterior cover. The skilled person will understand that a magazine insert is thin, typically essentially planar, and dimensioned smaller that the magazine footprint.

The contactless memory tag (CMT) is an electronic device comprising a memory component and a wireless transceiver for transfer of data. It comprises an antenna and integrated circuit (IC) configured to receive power from the antenna and wirelessly exchange data, typically transmitting data stored in a memory of the IC after being inductively activated. The CMT may be read-only or writable. An example of a CMT is a near-field communication (NFC) tag. NFC is a form of Radio Frequency Identification ("RFID") that permits contactless communication up to distances of about 4 or 5 cm. NFC utilizes inductive-coupling at a license-free frequency of 13.56 MHz and transfers data up to 424 Kbits/second. Communication between devices is established in a simple and automated manner. No pairings and no elaborate setups are required. Users may connect to and transfer digital content between different devices by touching (*e.g*. tapping) the devices together or bringing them within close proximity to one another.

The smart device may be a smartphone, or any computing device comprising a CMT reader such as an NFC reader module and a connection to the Internet. The smart device typically has a screen, an input means such as a touch screen, processor, memory, a connection to the internet preferably via a cellular network and a power source. A smartphone provided with an NRC reader module is well known in the art. The smart device may be provided with a computer program (an app) configured to process data received from the CMT, and to interact with a remote computer system (*e.g*. central server) across the Internet. The remote computer system is typically associated with the manufacturer of the product.

The memory in the CMT comprises an identifier of the product. The identifier is a digital identifier of the product. The identifier may be a unique identification code (UID) or a pointer (*e.g.* a URL) for a website or to the remote computer system. The pointer may allow streaming or download media (*e.g*. audio and/or visual).

The CMT may be disposed on an exterior or an interior of the artefact. The CMT may be disposed on a front or reverse exterior of the artefact.

The CMT offers a convenient means to exchange digital information; data exchange is initiated largely independent of the object to which the artefact is attached, and will operate in a variety of conditions *e.g*. humidity, temperature, illumination, and independent of the shape of the object.

The sensory stimulation element (SSE) reflects a characteristic of the product and provides a sensation such as olfactory, gustatory, tactile, visual, or sonic. The sensation stimulates one or more of the human or animal senses.

Where the sensation is olfactory the SSE emits a scent. The SSE maybe activated upon the application of heat or friction (*e.g*. scratch and sniff), moisture, or by releasing a seal. Typically a scent is encapsulated allowing it to remain captive until heat or friction is applied to break the capsule protective coating, and to release the fragrance. Examples of olfactory-stimulating SSEs include those provided by Scentsphere.

Where the sensation is gustatory the SSE provides a flavour sensation that is experienced by primarily taste optionally in combination with an olfactory sense. The SSE maybe activated upon the application of moisture.

Where the sensation is tactile the SSE provides a touch sensation. A tactile SSE maybe provided using techniques such as conventional embossing and debossing, laminating, coatings and varnishes, and the like. The SSE may comprise a sample of fabric that has been laundered using the product, and which provides a pleasant soft-touch sensation.

Where the sensation is visual the SSE provides a visual stimulation. The SSE may comprise a sample of colour. It may comprise a visual special effect such as a 3D impression (lenticular & holographic), or direct jet textured print.

The SSE maybe disposed on an exterior of the artefact, thereby allowing providing at least two sensory characteristics simultaneously such as olfactory and tactile. The SSE maybe disposed on a front exterior of the artefact.

It is appreciated that the SSE reflects a selected characteristic of the product, such as it scent, colour or texture. It will be appreciated that an SSE may stimulate a single sense, or may stimulate a combination of senses for enhanced effect. For instance, where the product is a fabric softener having a lavender colour and emitting a lavender scent, the SSE maybe provided with corresponding properties, namely having a lavender colour, emitting a lavender scent upon activation, and providing a soft-tactile feeling. The sensory stimulation element (SSE) is preferably one or more of olfactory, tactile, or visual stimulating. The sensory stimulation element (SSE) is preferably olfactory and/or tactile stimulating.

The CMT may transmit data according to the state of the SSE, wherein the SSE has at least two different states. Where the SSE is activatable, for instance for a scratch-and-sniff or a peel-and-sniff panel, the data may contain an indication of whether the SSE is in an unactivated or activated state. A CMT that can report two or more different states is known in the art from, for instance, EP 3 009 967.

It is an aspect of the invention that the artefact further comprises a comparative SSE, CSSE, that is not related to the product. The CCSE reflects a characteristic of a different or inferior product and provides a sensation such as one or more of olfactory, gustatory, tactile, visual, or sonic. The comparative SSE may be combined with a multi-state-reporting CMT such that data transmitted by the CMT data corresponds to which of the SSE or CSSE has been activated.

The CMT may transmit data according to the state of user-input panel having at least two states. The user input panel may comprise one or more switches or breakable elements that break an electrical contact. The user input panel allows the user to provide feedback, for example, with respect to the SSE, or a CSSE. A CMT that can report two or more different states is known in the art from, for instance, EP 3 009 967.

The artefact may initiate an audio (sonic) and/or a visual sensation, wherein the smart device receives and renders digital media (*e.g.* audio, video, pictures) related to the product responsive to detection of the CMT. The CMT memory may contain a pointer that directs a browser or app to a remote computer system (*e*.*g*. central server) for streaming or downloading of digital media stored thereon.

The artefact allows the consumer to pre-experience a product. The SSE provides a sensory experience that is often non-cognitive (sub-conscious), while the CMT provides a convenient way for the consumer to interact with the product by exchanging digital information about the product and optionally consumer contact details with a remote computer system.

In particular, the artefact solves the problem of providing a consumer with a product sample-pack. A sample-pack is a small amount, typically one dose, of an actual product. Where the product is a liquid fabric softener for instance, a dose sufficient for a single laundry cycle can be in the range of 20 to 40 ml, placing limits on sample-pack distribution, for instance, within a magazine. For many product forms a sample-pack must utilise a rigid container that is incompatible with magazine distribution. Other products cannot utilise the sample-pack form such as aerosols which require complex dispensing systems or features beyond what can be delivered in a sachet. Free distribution of a sample-pack, for instance, at a kiosk or using a display stand further incurs significant costs of manufacture, transport and retail rental-space. Moreover, waste is generated from unused or damaged samples. The artefact allows a weight and form reduction of a product sample-pack by providing a sensation related to the product via the SSE, and distribution of the sample is targeted to consumer who actively express interest in the product and register contact information using the CMT and their smart device.

Because the artefact can be produced with a thin structure, it can be conveniently applied or integrated into or onto various surfaces, for instance, a magazine page, product label, poster or sticker for public display, and onto other substrates such as plastics, metals, paper, wood or others through a layer of adhesive. In the case of a magazine, the artefact occupies less shelf space in a retail environment, and offers more stability to the magazine in an upright position. It is less destructive to the pages compared with conventional sample-packs that cause sagging, creasing and distortion over time.

The artefact is prepared such that the SSE and CMT are specific for the product. The SSE contains a sample of the sensory property of the product, and the CMT contains an identifier of the product.

The sensory property of the product may be selected by evaluating which of the senses of the product stimulates, and choosing at least one sensory property that is distinctive or strong. Where the sensory property is olfactory, for instance, the SSE may be prepared using an extract of the scent used to prepare the product. Where the sensory property is tactile, for instance, the SSE maybe prepared using swatch of soft fabric laundered using the product.

The identifier of the product stored in the CMT may be a unique identification code (UID) associated with the product typically using a look-up table that may be provided in a database. The UID may be written to the CMT, or the CMT may be provided with a pre-written UID and is associated with the product by creating an entry in a look-up table. The identifier may be a URL. The IUD may be associated to the product by the product commercial name, by product number, by batch number, or a combination of these.

When both the SSE and CMT have been created, they are mounted onto a substrate of the artefact. The SSE will generally be front facing for consumer access, while the placement of the CMT is non-critical for wireless data-exchange.

Further provided is the artefact prepared according to the method.

The artefact described herein may be used to transfer information related to the product to the consumer via a smart device. The artefact described herein may be used to transfer information related to the consumer to a remote computer system (*e*.*g*. central server) via a smart device.

According to one aspect, a method is provided transferring information relating to a product comprising:
- receiving on a smart device an identifier of a product from the artefact contactless memory tag (CMT), and
- transferring the identifier and optionally consumer contact information provided on the smart device over the Internet to a remote computer system (*e.g*. central server).

According to one aspect, a method is provided transferring information relating to a product comprising:
- receiving on a smart device an identifier of a product from the artefact contactless memory tag (CMT),
- transferring the identifier and optionally consumer contact information provided on the smart device over the Internet to a remote computer system (*e.g*. central server) to initiate fulfilment of the request, and
- receiving over the Internet from the remote computer system digital media (*e.g*. audio and/or video) relating to the product.

According to another aspect, a method is provided for requesting a sample-pack of a product, comprising:
- receiving on a smart device an identifier of a product from the artefact contactless memory tag (CMT),
- transferring the identifier and consumer contact information over the Internet to a remote computer system (*e*.*g*. central server), and
- receiving on the smart device a confirmation over the Internet from the remote computer system that a sample-pack of the product will be dispatched to the consumer.

The above mentioned methods are preferably performed using the smart device. Also provided is a computer program or computer program product (*e*.*g*. an app) having instructions which when executed by a smart device cause the smart device to perform the above-mentioned methods. Also provided is a data stream which is representative of a computer program or computer program product having instructions which when executed by the smart device cause the smart device to perform the method described above.

According to one aspect, a method is provided transferring information relating to a product comprising:
- receiving over the Internet from a smart device an identifier of a product from the artefact contactless memory tag (CMT) and optionally consumer contact information,
- sending over the Internet to the smart device digital media (*e*.*g*. audio and/or video) relating to the product.

According to another aspect, a method is provided for requesting a sample-pack of a product, comprising:
- receiving over the Internet from a smart device an identifier of a product from the artefact contactless memory tag (CMT),
- receiving over the Internet from the smart device consumer contact information, and
- sending over the Internet to the smart device a confirmation that a sample-pack of the product will be dispatched to the consumer.

The above mentioned methods are preferably performed on a remote computer system (*e.g*. central server). Also provided is a computer program or computer program product having instructions which when executed by a remote computer system cause the remote computer system to perform the above-mentioned methods.

Also provided is a data stream which is representative of a computer program or computer program product having instructions which when executed by the remote computer system cause the remote computer system to perform the above-mentioned methods.

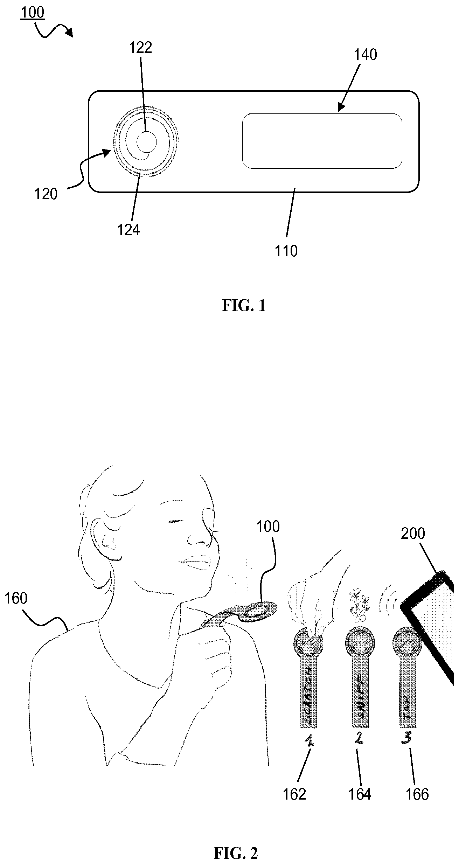

**FIG. 1** depicts an exemplary artefact (100) that is a label (110) provided with a contactless memory tag (CMT) (120) having an electronic circuit (122) and an antenna (124) and a sensory stimulation element (SSE) (140).

**FIG. 2** is a schematic depicting an exemplary application of a consumer (160) interacting with the artefact (100) relating to a consumer product, wherein the consumer (160) scratches (1162) the SSE to release a scent (164) of the product, and taps her smart phone (200) to exchange data via the CMT to receive by regular mail a tangible sample pack of the product.

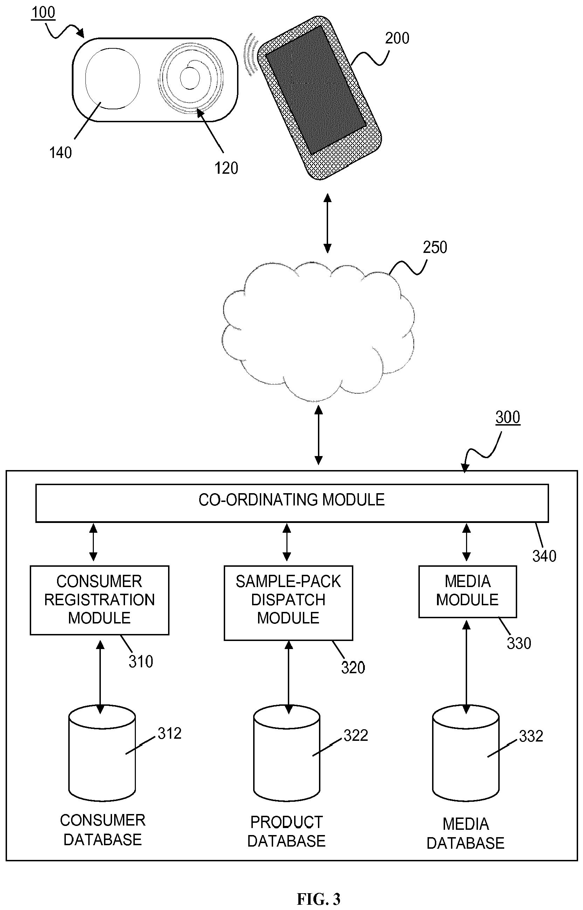

**FIG. 3** depicts an instance of information transfer from the artefact (100), via a smartphone (200) across the Internet (250) to the remote computer system (300). The remote computer system (300) has an exemplary configuration comprising a consumer registration module (310) with access to a consumer database (312), a sample-pack-dispatch module (320) with access to a product database (322), and a media module (330) with access to a media database (322). The consumer registration module (310) receives consumer contact details from the smart phone (200) and an identification of the product according to the CMT (140) which are stored on the consumer database (312). If a sample-pack is requested, the sample-pack dispatch module (320) checks availability of a sample-pack from the product database (322). The co-ordinating module (340) prepares dispatch information relating the consumer contact details from the consumer registration module (310) to a requisition order of the sample-pack from the sample-pack dispatch module (320). If a request for more information about the product is received, the co-ordinating module (340) sends the request to the media module (330) and sends back to the smartphone (200) digital information relating to the product such as a web-page, streaming audio and/or video, an electronic document.

The remote computer system typically comprises one or more interconnected servers connected to the Internet. The modules (310, 320, 330, 340) are typically software-implemented.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. An artefact (100) relating to a product comprising:
- a contactless memory tag (120), CMT, containing at least an identifier of the product, and
- a sensory stimulation element (140), SSE, reflecting a characteristic of the product.

2. The artefact according to claim 1, wherein the SSE (140) is scent-releasing and the CMT (120) is a near-field communication, NFC, tag.

3. The artefact according to claim 1 that is a magazine insert.

4. The artefact (100) according to any of claims 1 to 3, wherein the CMT is configured to transmit data according to the state of the SSE, where the SSE has an unactivated or activated state.

5. The artefact (100) according to any of claims 1 to 4, further comprising a user-input panel having at least two states wherein the CMT is configured to transmit data according to the state of the user-input panel.

6. Method for preparing an artefact (100) according to any of claims 1 to 5, comprising:
- identifying a sensory property of the product,
- incorporating a sample of the sensory property into the SSE (140),
- providing the CMT (120), wherein the memory contains an identifier of the product, and
- providing the artefact (100) containing the SSE (140) and CMT (120).

7. The method according to claim 6, further comprising a step of attaching the CMT (120) and the artefact (100) to a substrate.

8. An artefact prepared according to a method of claim 6 or 7.

9. A method for requesting a sample-pack of a product, comprising:
- receiving on a smart device (200) an identifier of a product from the CMT (120) of the artefact (100) according to any of claims 1 to 5 and 8,
- transferring the identifier and consumer contact information from the smart device (200) over the Internet (250) to a remote computer system (300) to initiate fulfilment of the request, and
- receiving on the smart device (200) a confirmation that a sample-pack of the product is to dispatched to the consumer.

10. The method according to claim 9, performed by the smart device (200).

11. A data stream which is representative of a computer program or computer program product having instructions which when executed by a computing device cause the computing device to perform the method according to claim 9.

12. A method for requesting a sample-pack of a product, comprising:
- receiving over the Internet (250) from a smart device (200) an identifier of a product from the CMT (120) of the artefact (100) according to any of claims 1 to 5 and 8,
- receiving over the Internet (250) from the smart device (200) consumer contact information, and
- sending over the Internet (250) to the smart device (200) a confirmation that a sample-pack of the product is to be dispatched to the consumer.

13. The method according to claim 12, performed by remote computer system (300) connected to the Internet (250).

14. A computer program or computer program product having instructions which when executed by a computing device or system cause the computing device or system to perform the method according to claim 12.
